# EUROPEAN PATENT APPLICATION

(11) **EP 4 550 279 A1**
(43) Date of publication of application: **07.05.2025**
(21) Application number: 24209415.9
(22) Date of filing: 29.10.2024
(51) Int. Cl.: G06V 40/18

(54) **METHOD AND SYSTEM FOR IRIS SEGMENTATION**

(30) Priority: 02.11.2023 IN 202321074789
(71) Applicant: Tata Consultancy Services Limited, Maharashtra (IN)
(72) Inventor: VINAYAK KUMAR, CHARAKA, 500001 Hyderabad, Telangana (IN); CHALAMALA, SRINIVASA RAO, 500034 Hyderabad, Telangana (IN); PONNAPALLI, SESHU SRI, 500034 Hyderabad, Telangana (IN)
(74) Representative: Goddar, Heinz J.

(57) **Abstract**

In the Iris based biometric recognition systems, iris needs to be segmented before comparison and hence iris segmentation is a crucial process in iris based biometric recognition systems. Existing techniques are unable to segment iris due to occlusions and require complex and time consuming algorithms to remove these occlusions. Other deep learning based solutions require precise annotations of the iris regions along with eyelids and eyelashes. The present disclosure initially generates polygons on the iris and pupil area using a pre-trained detection model. Internally covered vertices and externally exposed vertices of the generated polygons are computed to construct curvature of the iris region. A pupil region is generated by filtering the plurality of vertices lying inside pupil circle region from the plurality of externally exposed vertices. Further, a segmented iris image is generated by removing the pupil region from the input image based on the curvature of the iris region.

## Description

### CROSS-REFERENCE TO RELATED APPLICATIONS AND PRIORITY

The present application claims priority to Indian application no. 202321074789, filed on Nov 02, 2023.

### TECHNICAL FIELD

The disclosure herein generally relates to the field of image processing and, more particularly, to a method and system for iris segmentation.

### BACKGROUND

Iris a muscle in the eye that regulates pupil size. Ophthalmologists confirmed in the 1980s that the patterns on the iris are unique to each individual. This led to the development of iris recognition technology for identity verification in the mid '90s. Iris recognition or iris scanning is the process of using visible and near-infrared light to take a high-contrast photograph of a person's iris. Iris based recognition is a widely used biometric recognition technique employed in many fields because of its low false rejection probability. In the iris based biometric recognition, iris needs to be segmented before comparison and hence iris segmentation is a crucial process in Iris based biometric recognition systems.

Existing non-deep learning methods of iris segmentation use Circular Hough Transforms (CHT) to fit circular areas for iris and pupil regions. In general eye images are often occluded with eyelashes, eye lids and other forms of lighting distortions which cannot be detected/filtered using simple CHT based methods and require complex and time consuming algorithms to remove these occlusions. Many of the deep learning based solutions such as U-nets and Visual Geometry Group (VGG)-Net were proposed to solve the iris segmentation problem, but these solutions require precise annotations of the iris regions along with eyelids and eyelashes. The precise annotations required are always manually done and or using sophisticated tools. Thus, the datasets and annotations used by standard iris recognition methods are not readily available and the tools used for annotations are not fast enough due to human interventions and this process is not scalable.

### SUMMARY

Embodiments of the present disclosure present technological improvements as solutions to one or more of the above-mentioned technical problems recognized by the inventors in conventional systems. For example, in one embodiment, a method for iris segmentation is provided. The method includes receiving, by one or more hardware processors, an input image pertaining to eye of a subject, wherein the image comprises iris, pupil and sclera. Further, the method includes generating, by the one or more hardware processors, a plurality of polygons on the input image using a trained object detection model, wherein each of the plurality of polygons are associated with a plurality of vertices. Furthermore, the method includes identifying, by the one or more hardware processors, a plurality of internally covered vertices from among the plurality of vertices associated with each of the plurality of polygons only if (i) x coordinate value of a vertex lies between x intercept values of vertical lines associated with the corresponding polygon and (ii) y coordinate value of the vertex lies between y intercept values of horizontal lines associated with the corresponding polygon. Furthermore, the method includes identifying, by the one or more hardware processors, a plurality of externally exposed vertices associated with each of the plurality of polygons by filtering a set of vertices lying inside a circular pupil region based on a comparison between the radius of the pupil and the distance between each vertex from a pupil center, wherein the circular pupil region is identified from the input image using an image processing technique. Furthermore, the method includes computing, by the one or more hardware processors, an angle made by each of the plurality of externally exposed vertices with reference to a positive x-axis of a cartesian coordinate system based on a line segment generated by joining the pupil center and a corresponding externally exposed vertex. Furthermore, the method includes sorting, by the one or more hardware processors, the plurality of externally exposed vertices in ascending order based on a corresponding computed angle. Furthermore, the method includes extrapolating, by the one or more hardware processors, a plurality of points lying between adjacent externally exposed vertices using a linear function, wherein adjacency is considered based on ascending order of the computed angle. Furthermore, the method includes constructing, by the one or more hardware processors, a closed curvature of an iris region on the input image by combining the sorted plurality of externally exposed vertices and the extrapolated plurality of points, wherein the closed curvature is further smoothened using a dilation filter. Finally, the method includes generating, by the one or more hardware processors, a segmented iris region from the input image by removing the circular pupil region from an area covered by the closed curvature of the iris region.

In another aspect, a system for iris segmentation is provided. The system includes at least one memory storing programmed instructions, one or more Input /Output (I/O) interfaces, and one or more hardware processors operatively coupled to the at least one memory, wherein the one or more hardware processors are configured by the programmed instructions to receive an input image pertaining to eye of a subject, wherein the image comprises iris, pupil and sclera. Further, the one or more hardware processors are configured by the programmed instructions to generate a plurality of polygons on the input image using a trained object detection model, wherein each of the plurality of polygons are associated with a plurality of vertices. Furthermore, the one or more hardware processors are configured by the programmed instructions to identify a plurality of internally covered vertices from among the plurality of vertices associated with each of the plurality of polygons only if (i) x coordinate value of a vertex lies between x intercept values of vertical lines associated with the corresponding polygon and (ii) y coordinate value of the vertex lies between y intercept values of horizontal lines associated with the corresponding polygon. Furthermore, the one or more hardware processors are configured by the programmed instructions to identify a plurality of externally exposed vertices associated with each of the plurality of polygons by filtering a set of vertices lying inside a circular pupil region based on a comparison between the radius of the pupil and the distance between each vertex from a pupil center, wherein the circular pupil region is identified from the input image using an image processing technique. Furthermore, the one or more hardware processors are configured by the programmed instructions to compute an angle made by each of the plurality of externally exposed vertices with reference to a positive x-axis of a cartesian coordinate system based on a line segment generated by joining the pupil center and a corresponding externally exposed vertex. Furthermore, the one or more hardware processors are configured by the programmed instructions to sort the plurality of externally exposed vertices in ascending order based on a corresponding computed angle. Furthermore, the one or more hardware processors are configured by the programmed instructions to extrapolate a plurality of points lying between adjacent externally exposed vertices using a linear function, wherein adjacency is considered based on ascending order of the computed angle. Furthermore, the one or more hardware processors are configured by the programmed instructions to construct a closed curvature of an iris region on the input image by combining the sorted plurality of externally exposed vertices and the extrapolated plurality of points, wherein the closed curvature is further smoothened using a dilation filter. Finally, the one or more hardware processors are configured by the programmed instructions to generate a segmented iris region from the input image by removing the circular pupil region from an area covered by the closed curvature of the iris region.

In yet another aspect, a computer program product including a non-transitory computer-readable medium having embodied therein a computer program for iris segmentation is provided. The computer readable program, when executed on a computing device, causes the computing device to receive an input image pertaining to eye of a subject, wherein the image comprises iris, pupil and sclera. Further, the computer readable program, when executed on a computing device, causes the computing device to generate a plurality of polygons on the input image using a trained object detection model, wherein each of the plurality of polygons are associated with a plurality of vertices. Furthermore, the computer readable program, when executed on a computing device, causes the computing device to identify a plurality of internally covered vertices from among the plurality of vertices associated with each of the plurality of polygons only if (i) x coordinate value of a vertex lies between x intercept values of vertical lines associated with the corresponding polygon and (ii) y coordinate value of the vertex lies between y intercept values of horizontal lines associated with the corresponding polygon. Furthermore, the computer readable program, when executed on a computing device, causes the computing device to identify a plurality of externally exposed vertices associated with each of the plurality of polygons by filtering a set of vertices lying inside a circular pupil region based on a comparison between the radius of the pupil and the distance between each vertex from a pupil center, wherein the circular pupil region is identified from the input image using an image processing technique. Furthermore, the computer readable program, when executed on a computing device, causes the computing device to compute an angle made by each of the plurality of externally exposed vertices with reference to a positive x-axis of a cartesian coordinate system based on a line segment generated by joining the pupil center and a corresponding externally exposed vertex. Furthermore, the computer readable program, when executed on a computing device, causes the computing device to sort the plurality of externally exposed vertices in ascending order based on a corresponding computed angle. Furthermore, the computer readable program, when executed on a computing device, causes the computing device to extrapolate a plurality of points lying between adjacent externally exposed vertices using a linear function, wherein adjacency is considered based on ascending order of the computed angle. Furthermore, the computer readable program, when executed on a computing device, causes the computing device to construct a closed curvature of an iris region on the input image by combining the sorted plurality of externally exposed vertices and the extrapolated plurality of points, wherein the closed curvature is further smoothened using a dilation filter. Finally, the computer readable program, when executed on a computing device, causes the computing device to generate a segmented iris region from the input image by removing the circular pupil region from an area covered by the closed curvature of the iris region.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 is a functional block diagram of a system for iris segmentation, in accordance with some embodiments of the present disclosure.
FIG. 2 (FIG. 2A and FIG. 2B) illustrates a flow diagram for a processor implemented method for iris segmentation, in accordance with some embodiments of the present disclosure.
FIG. 3A illustrates an example input image for the processor implemented method for iris segmentation, in accordance with some embodiments of the present disclosure.
FIG. 3B illustrates an example generated polygons for the processor implemented method for iris segmentation, in accordance with some embodiments of the present disclosure.
FIG. 3C illustrates an example plurality of filters for the processor implemented method for iris segmentation, in accordance with some embodiments of the present disclosure.
FIG. 3D illustrates an example plurality of polygons for the processor implemented method for iris segmentation, in accordance with some embodiments of the present disclosure.
FIG. 3E illustrates an example internally covered vertices for the processor implemented method for iris segmentation, in accordance with some embodiments of the present disclosure.
FIG. 3F illustrates an example segmented pupil region for the processor implemented method for iris segmentation, in accordance with some embodiments of the present disclosure.
FIG. 3G illustrates an example angle made by each vertex with a positive x-axis and example externally exposed points for the processor implemented method for iris segmentation, in accordance with some embodiments of the present disclosure.
FIG. 3H illustrates an example curvature of iris for the processor implemented method for Iris segmentation, in accordance with some embodiments of the present disclosure.
FIG. 3I illustrates an example segmented iris from the input image for the processor implemented method for iris segmentation, in accordance with some embodiments of the present disclosure.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the spirit and scope of the disclosed embodiments.

In the Iris based biometric recognition systems, iris needs to be segmented before comparison and hence iris segmentation is a crucial process in iris based biometric recognition systems. Existing techniques for iris segmentation utilizes Circular Hough Transforms (CHT) to fit circular areas for iris and pupil regions. In general eye images are often occluded with eyelashes, eye lids and other forms of lighting distortions which cannot be detected/filtered using simple CHT based methods and require complex and time consuming algorithms to remove these occlusions. Other deep learning based solutions require precise annotations of the iris regions along with eyelids and eyelashes.

To overcome the challenges of the conventional approaches, embodiments herein provide a method and system for iris segmentation. The present disclosure utilizes a modular approach to solve the iris segmentation problem. Instead of detecting the iris region as a whole, the present disclosure detects small sub-region of the iris. And many such sub-regions jointly represent the un-occluded area of the iris. In this way this method avoids the regions of iris that are occluded by eyelashes and eyelids and avoids regions with any light distortions. At the time of segmentation, the detected sub-regions are used to reconstruct the overall iris image. CHT is used to detect the pupil region and the difference of the complete iris and pupil regions will provide the only-iris region required for the recognition. Further, the present disclosure uses generic dataset and refines it by following a set of pre-processing steps. The refined training dataset contains annotations of sub-regions of the overall iris region. The size of the sub-regions is configurable based on the resolution of the iris scans in the dataset. The refined dataset is used for training the object detection model.

The present disclosure initially generates polygons on the iris and pupil area using a pre-trained detection model. Internally covered vertices and externally exposed vertices of the generated polygons are identified based on the generated polygons to construct curvature of the iris region. A pupil region is detected and a plurality of vertices lying inside pupil circle region are filtered out from the plurality of externally exposed vertices along with the plurality of vertices that lie inside other generated polygons. Further, a segmented iris image is generated by removing the pupil region from the input image based on the curvature of the iris region.

The present disclosure performs iris segmentation on highly occluded images including eyelids and eyelashes, ethnicity. Further, the present disclosure solves the problem of partial iris regions which are otherwise not recognized by traditional methods and also overcomes the need for manually annotating large number of images. Furthermore, the present disclosure overcomes the scarcity of high-quality annotated datasets and eliminates the need for specialized data or their ground truth values. Also, it solves the problem of cross dataset inference inaccuracies.

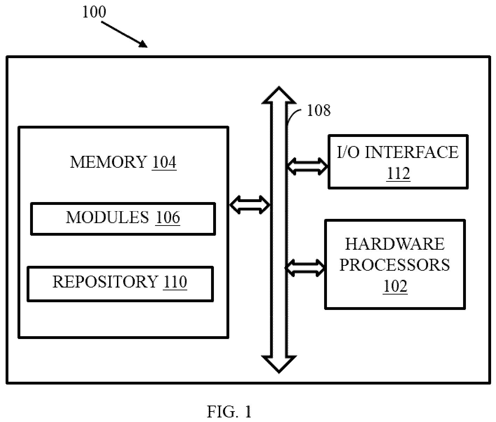

Referring now to the drawings, and more particularly to FIG. 1 through FIG. 3I, where similar reference characters denote corresponding features consistently throughout the figures, there are shown preferred embodiments and these embodiments are described in the context of the following exemplary system and/or method.

FIG. 1 is a functional block diagram of a system 100 for iris segmentation, in accordance with some embodiments of the present disclosure. The system 100 includes or is otherwise in communication with hardware processors 102, at least one memory such as a memory 104, an Input /Output (I/O) interface 112. The hardware processors 102, memory 104, and the I/O interface 112 may be coupled by a system bus such as a system bus 108 or a similar mechanism. In an embodiment, the hardware processors 102 can be one or more hardware processors.

The I/O interface 112 may include a variety of software and hardware interfaces, for example, a web interface, a graphical user interface, and the like. The I/O interface 112 may include a variety of software and hardware interfaces, for example, interfaces for peripheral device(s), such as a keyboard, a mouse, an external memory, a printer and the like. Further, the I/O interface 112 may enable the system 100 to communicate with other devices, such as web servers, and external databases.

The I/O interface 112 can facilitate multiple communications within a wide variety of networks and protocol types, including wired networks, for example, local area network (LAN), cable, etc., and wireless networks, such as Wireless LAN (WLAN), cellular, or satellite. For the purpose, the I/O interface 112 may include one or more ports for connecting several computing systems with one another or to another server computer. The I/O interface 112 may include one or more ports for connecting several devices to one another or to another server.

The one or more hardware processors 102 may be implemented as one or more microprocessors, microcomputers, microcontrollers, digital signal processors, central processing units, node machines, logic circuitries, and/or any devices that manipulate signals based on operational instructions. Among other capabilities, the one or more hardware processors 102 is configured to fetch and execute computer-readable instructions stored in the memory 104.

The memory 104 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. In an embodiment, the memory 104 includes a plurality of modules 106. The memory 104 also includes a data repository (or repository) 110 for storing data processed, received, and generated by the plurality of modules 106.

The plurality of modules 106 include programs or coded instructions that supplement applications or functions performed by the system 100 for iris segmentation. The plurality of modules 106, amongst other things, can include routines, programs, objects, components, and data structures, which performs particular tasks or implement particular abstract data types. The plurality of modules 106 may also be used as, signal processor(s), node machine(s), logic circuitries, and/or any other device or component that manipulates signals based on operational instructions. Further, the plurality of modules 106 can be used by hardware, by computer-readable instructions executed by the one or more hardware processors 102, or by a combination thereof. The plurality of modules 106 can include various sub-modules (not shown). The plurality of modules 106 may include computer-readable instructions that supplement applications or functions performed by the system 100 for iris segmentation.

The data repository (or repository) 110 may include a plurality of abstracted piece of code for refinement and data that is processed, received, or generated as a result of the execution of the plurality of modules in the module(s) 106.

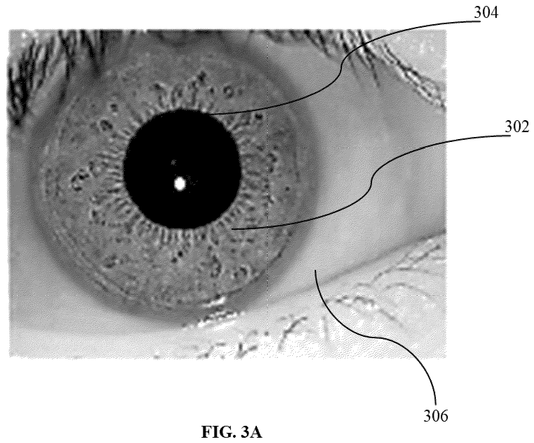

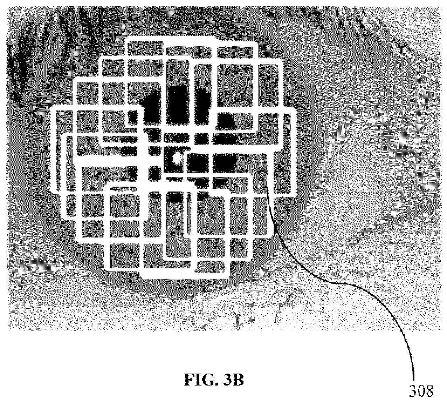

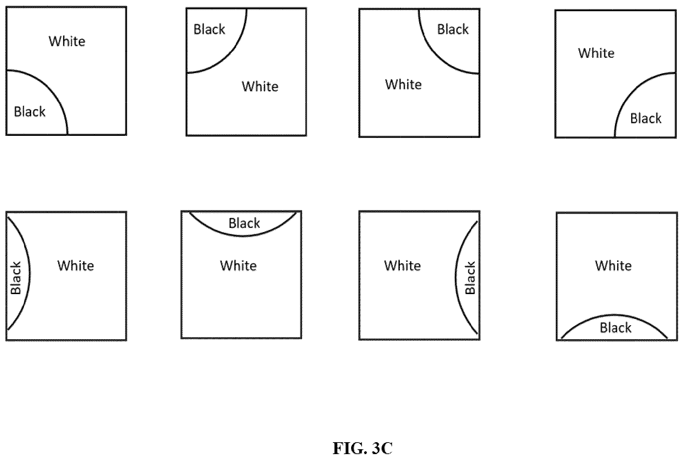

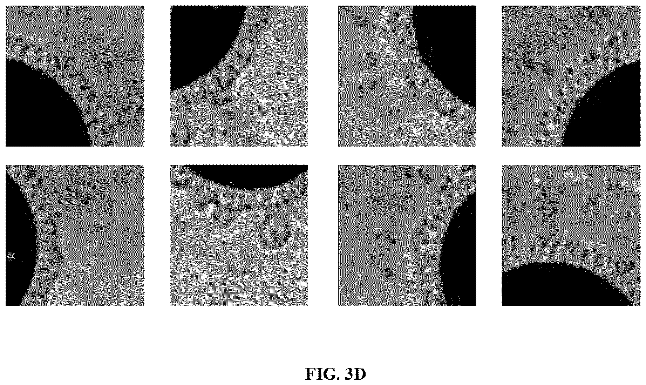

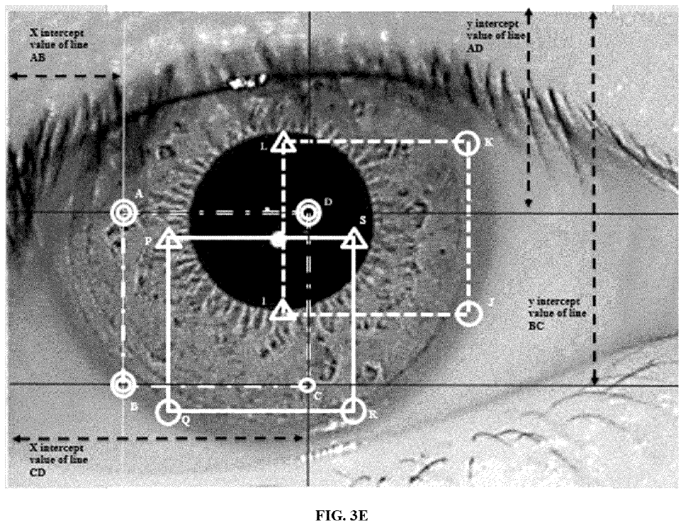

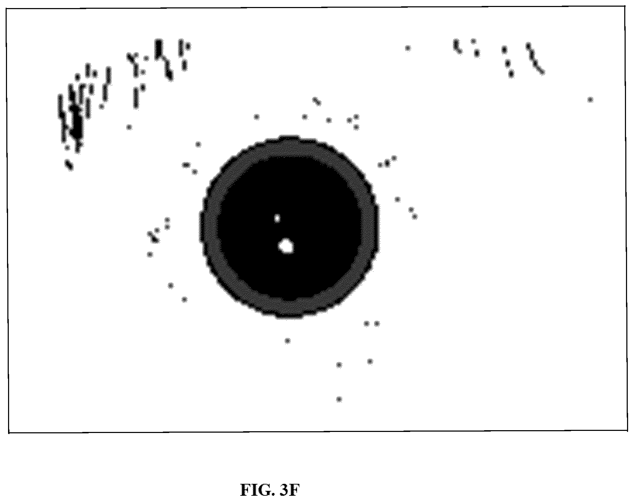

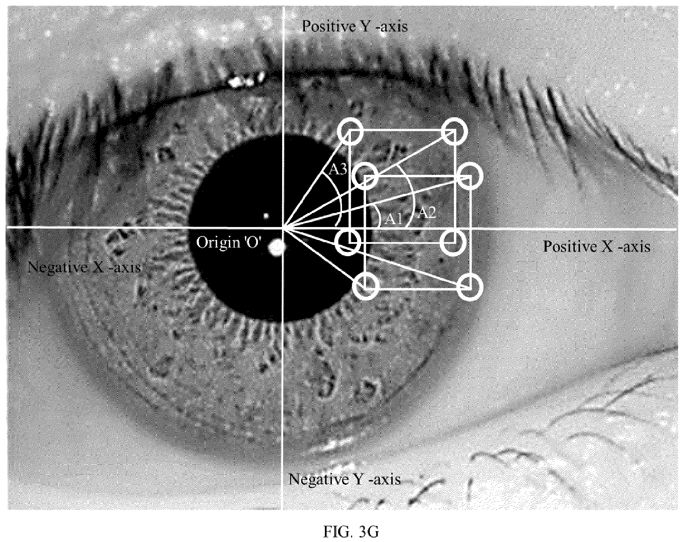

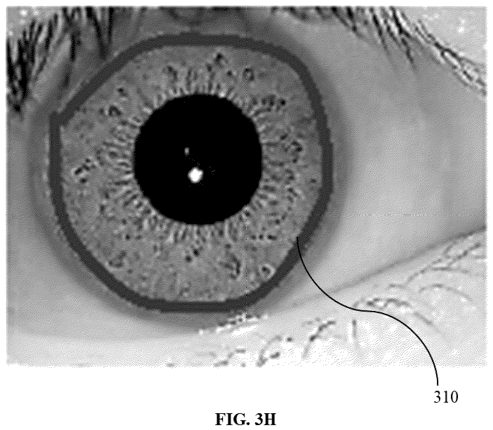

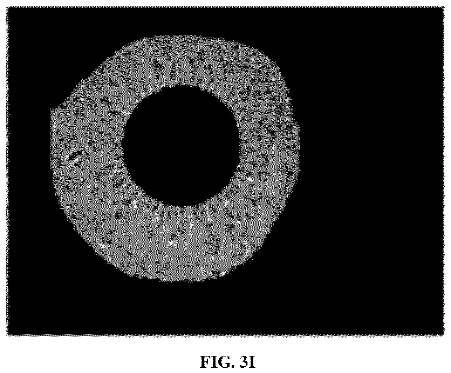

Although the data repository 110 is shown internal to the system 100, it will be noted that, in alternate embodiments, the data repository 110 can also be implemented external to the system 100, where the data repository 110 may be stored within a database (repository 110) communicatively coupled to the system 100. The data contained within such an external database may be periodically updated. For example, new data may be added into the database (not shown in FIG. 1) and/or existing data may be modified and/or non-useful data may be deleted from the database. In one example, the data may be stored in an external system, such as a Lightweight Directory Access Protocol (LDAP) directory and a Relational Database Management System (RDBMS). Working of the components of the system 100 are explained with reference to the method steps depicted in FIG. 3.

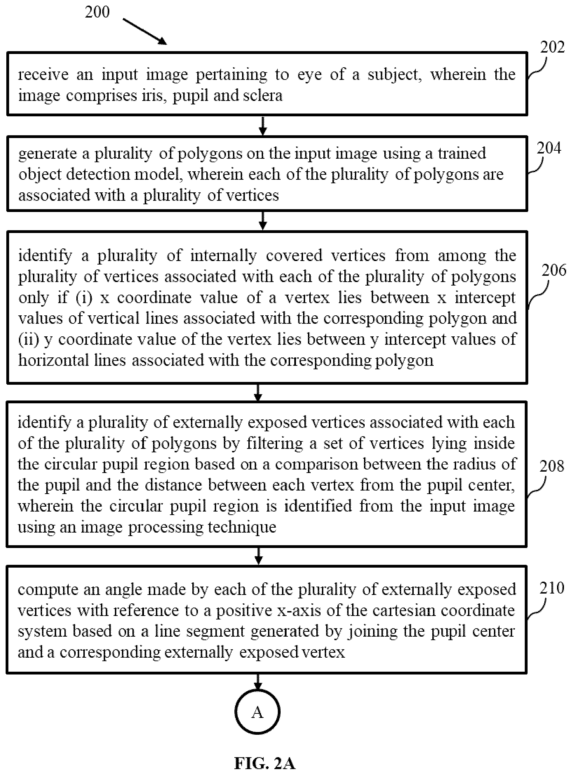

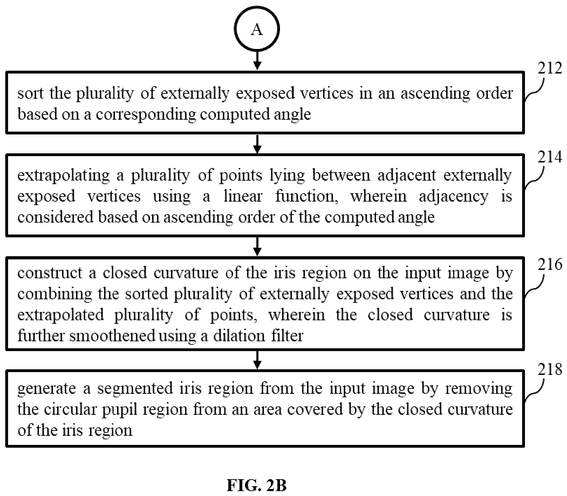

FIG. 2 is an exemplary flow diagrams illustrating a method 200 for iris segmentation implemented by the system of FIG. 1 according to some embodiments of the present disclosure. In an embodiment, the system 100 includes one or more data storage devices or the memory 104 operatively coupled to the one or more hardware processor(s) 102 and is configured to store instructions for execution of steps of the method 200 by the one or more hardware processors 102. The steps of the method 200 of the present disclosure will now be explained with reference to the components or blocks of the system 100 as depicted in FIG. 1 and the steps of flow diagram as depicted in FIG. 2. The method 200 may be described in the general context of computer executable instructions. Generally, computer executable instructions can include routines, programs, objects, components, data structures, procedures, modules, functions, etc., that perform particular functions or implement particular abstract data types. The method 200 may also be practiced in a distributed computing environment where functions are performed by remote processing devices that are linked through a communication network. The order in which the method 200 is described is not intended to be construed as a limitation, and any number of the described method blocks can be combined in any order to implement the method 200, or an alternative method. Furthermore, the method 200 can be implemented in any suitable hardware, software, firmware, or combination thereof.

At step 202 of the method 200, the one or more hardware processors 102 are configured by the programmed instructions to receive an input image pertaining to eye of a subject, wherein the image comprises iris, pupil, sclera and eye lid as shown in FIG. 3A. Now referring to FIG. 3A, 302 represents iris, 304 represents pupil and 306 represents sclera.

At step 204 of the method 200, the one or more hardware processors 102 are configured by the programmed instructions to generate a plurality of polygons on the input image using an object detection model, wherein each of the plurality of polygons are associated with a plurality of vertices. FIG. 3B illustrates the polygons generated on the pupil and iris area of the input image. Now referring to FIG. 3B, 302 represents the plurality of polygons generated on pupil and iris region.

For example, the steps for generating the plurality of polygons using the object detection model is explained as follows. Initially, a generic iris dataset comprising a plurality of iris images is given as input to the object detection model. Further, a plurality of augmented images corresponding to each of the plurality of iris images are generated by scaling the corresponding plurality of iris images based on a plurality of scales, wherein the plurality of scales includes angle, image size and the like. After generating the plurality of augmented images, a polygon size is selected based on the obtained generic iris dataset so that at least one vertex of the polygon touches inner boundary of the iris region, and each polygon includes a portion of the iris and a portion of the pupil. Further, a plurality of overlapping polygons of selected polygon size corresponding to each of the plurality of augmented images are annotated, wherein each of the plurality of overlapping polygons includes a plurality of vertices. After annotation, the plurality of polygons are identified from among the plurality of overlapping polygons touching inner boundary of the iris region and including the portion of the iris and the portion of the pupil. Finally, the object detection model is trained using the identified plurality of polygons until a predefined number of epochs.

For each of the plurality of iris images belonging to a dataset, multiple overlapping Regions-of-Interests (ROI) are extracted with the help of custom annotation tool. Annotation is collected in the form of coordinates of polygonal ROI. The annotated polygons are chosen such that they overlap with each other and completely lie within the boundaries of the iris region. To improve the iris detection extracted ROIs, annotated polygons are chosen such that some portion of the pupil is also included in it. Selection of candidate annotated polygons is rationalized by the following points: a) This helps in identifying more densely populated ROIs. b) The presence of a circular arc helps in better object detection. c) ROIs are designed to not contain sclera regions which is unwanted in our expected object detection output.

The plurality of annotated polygons are processed using a plurality of filters which are of the same size as the annotated polygon. The plurality of filters are designed as follows: a) Each of the plurality of the filters is characterized by a first region and a second region, wherein the first region is a white region and the second region is semi-circular black region, wherein the semi-circular black region is always at one of the side or in between multiple sides of the polygon. The plurality of filters are designed such that each filter's semi-circular region covers one position among the 8 positions i,e. (top, bottom, left, right, top-right, top-left, bottom-right, bottom-left) and the area of black region is about 15% of the image size as shown in FIG. 3C. The plurality of polygons are identified from among the plurality of overlapping polygons by computing a pixel-wise dot product between each of the plurality of overlapping polygons and each of the plurality of filters. The obtained product region is an overlap between the pupil region of the annotated polygon and the black semicircle region of the corresponding filter. FIG. 3D illustrates some of the plurality of polygons obtained by computing the pixel-wise dot product between each of the plurality of overlapping polygons and each of the plurality of filters. An area associated with the obtained product region is at least half of the black semicircle region of the corresponding filter. In this step black region pixel values are considered as binary ones and white region pixel values are considered as binary zeros. For example, if the product result contains non-zero pixels in more than half of the pixels of filter's black region that candidate annotation polygon is considered for training.

Inclusion of pupil region along with the iris helps in creating unique feature set. To further enhance the uniqueness of the feature set, the ROIs chosen for extraction of the iris always include a portion of the pupil region in one or more edges of the polygon. This will help in learning unique features by the object detection model, and generalizable to other datasets. The size of the polygon can be variable and can be tuned based on the dataset requirements.

Data Augmenter: Since the dataset used is a generic one there is a need for data augmentation to increase the polygon learning efficiency of the object detection model. The present disclosure uses image rotation and scaling for data augmentation. For example, the images were rotated by 10, 20, 30, 40 degrees for optimal learning enhancements. Also scaled images of scales 1.5X and 2X times of the original image size were used. Further 2 types of annotated polygons were collected 1) polygon annotations collected before the image rotation 2) polygon annotations collected after the image rotation.

At step 206 of the method 200, the one or more hardware processors 102 are configured by the programmed instructions to identify a plurality of internally covered vertices from among the plurality of vertices associated with each of the plurality of polygons only if (i) x coordinate value of a vertex lies between x intercept values of vertical lines associated with the corresponding polygon and (ii) y coordinate value of the vertex lies between y intercept values of horizontal lines associated with the corresponding polygon. In an embodiment, to optimize this step 206, vertices associated with nearest polygons are checked. The internally covered vertices are the vertices lying in other polygons from among the plurality of polygons. For example, FIG. 3C illustrates some examples of internally covered vertices. Now referring to FIG. 3C, three example polygons ABCD, PQRS and IJKL are represented for explanatory purpose, and it is to be understood that a greater number of polygons are generated during execution. The points P, I, L and S marked with triangle are some of the internally covered vertices. Further, the FIG. 3E illustrates the x intercept value of lines AB and CD, and the y intercept values of lines AD and BC as well.

At step 208 of the method 200, the one or more hardware processors 102 are configured by the programmed instructions to identify a plurality of externally exposed vertices associated with each of the plurality of polygons by filtering a set of vertices lying inside the circular pupil region based on a comparison between the radius of the circular pupil region and a distance between each vertex from the pupil center. For example, the vertices having the distance (distance between the vertex and the pupil center) less than or equal to the radius of the circular pupil region are removed to obtain the plurality of externally exposed vertices. The circular pupil region is identified from the input image using an image processing technique. An example, circular pupil region is illustrated in FIG. 3E. For example, FIG. 3G illustrates some example externally exposed vertices. Now referring to FIG. 3G, the vertices V, W, X, Y and Z marked as circles are some of the example externally exposed vertices.

At step 210 of the method 200, the one or more hardware processors 102 are configured by the programmed instructions to compute an angle made by each of the plurality of externally exposed vertices with reference to a positive x-axis of the cartesian coordinate system based on a line segment generated by joining the pupil center and a corresponding externally exposed vertex as shown in FIG. 3G. Now referring to FIG. 3G, angle A3 is made by vertex V with respect to the positive X-axis. Similarly, A1 is made by vertex X and A3 is made by vertex W and the like.

At step 212 of the method 200, the one or more hardware processors 102 are configured by the programmed instructions to sort the plurality of externally exposed vertices in ascending order based on a corresponding computed angle.

At step 214 of the method 200, one or more hardware processors 102 are configured by the programmed instructions extrapolate a plurality of points lying between adjacent externally exposed vertices using a linear function, wherein adjacency is considered based on ascending order of the computed angle. For example, considering FIG. 3G, angles are sorted like A3<A2<A1 and the corresponding vertices are V, W and X. Hence the plurality of points between X and W are extrapolated followed by the extrapolation of points between W and V.

At step 216 of the method 200, one or more hardware processors 102 are configured by the programmed instructions to construct a closed curvature of the iris region on the input image based on the sorted plurality of externally exposed vertices and the extrapolated plurality of points, wherein the curvature is further smoothened using a dilation filter. An example closed curvature of the iris 310 is illustrated in FIG. 3H.

At step 218 of the method 200, one or more hardware processors 102 are configured by the programmed instructions to generate a segmented iris region from the input image by removing the circular pupil region from an area covered by the closed curvature of the iris region as shown in FIG. 3I.

In another embodiment, the plurality of internally covered vertices are identified using an alternative method described as follows. Each of the plurality of polygons is represented by an equation satisfying the region of the corresponding polygon. Identically the pupil region is also represented by an equation representing the circular region. In this approach the plurality of vertices will be checked to see if they satisfy the regions representing the plurality of polygons and equation representing the circular region. The satisfying vertices are filtered out from the plurality of vertices given the externally exposed points.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of present disclosure herein address the unresolved problem of iris segmentation. The present disclosure performs iris segmentation on highly occluded images including eyelids and eyelashes, ethnicity. Further, the present disclosure solves the problem of partial iris regions which are otherwise not recognized by traditional methods and also overcomes the need for manually annotating large number of images. Furthermore, the present disclosure overcomes the scarcity of high-quality annotated datasets and eliminates the need for specialized data or their ground truth values. Also, it solves the problem of cross dataset inference inaccuracies.

It is to be understood that the scope of the protection is extended to such a program and in addition to a computer-readable means having a message therein such computer-readable storage means contain program-code means for implementation of one or more steps of the method when the program runs on a server or mobile device or any suitable programmable device. The hardware device can be any kind of device which can be programmed including e.g. any kind of computer like a server or a personal computer, or the like, or any combination thereof. The device may also include means which could be e.g. hardware means like e.g. an application-specific integrated circuit (ASIC), a field-programmable gate array (FPGA), or a combination of hardware and software means, e.g. an ASIC and an FPGA, or at least one microprocessor and at least one memory with software modules located therein. Thus, the means can include both hardware means and software means. The method embodiments described herein could be implemented in hardware and software. The device may also include software means. Alternatively, the embodiments may be implemented on different hardware devices, e.g. using a plurality of CPUs, GPUs and edge computing devices.

The embodiments herein can comprise hardware and software elements. The embodiments that are implemented in software include but are not limited to, firmware, resident software, microcode, etc. The functions performed by various modules described herein may be implemented in other modules or combinations of other modules. For the purposes of this description, a computer-usable or computer readable medium can be any apparatus that can comprise, store, communicate, propagate, or transport the program for use by or in connection with the instruction execution system, apparatus, or device. The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope and spirit of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise. Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e. non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method (200), the method comprising:
receiving (202), by one or more hardware processors, an input image pertaining to eye of a subject, wherein the image comprises iris, pupil and sclera;
generating (204), by the one or more hardware processors, a plurality of polygons on the input image using a trained object detection model, wherein each of the plurality of polygons are associated with a plurality of vertices;
identifying (206), by the one or more hardware processors, a plurality of internally covered vertices from among the plurality of vertices associated with each of the plurality of polygons only if (i) x coordinate value of a vertex lies between x intercept values of vertical lines associated with the corresponding polygon and (ii) y coordinate value of the vertex lies between y intercept values of horizontal lines associated with the corresponding polygon;
identifying (208), by the one or more hardware processors, a plurality of externally exposed vertices associated with each of the plurality of polygons by filtering a set of vertices lying inside a circular pupil region based on a comparison between the radius of the pupil and the distance between each vertex from a pupil center, wherein the circular pupil region is identified from the input image using an image processing technique;
computing (210), by the one or more hardware processors, an angle made by each of the plurality of externally exposed vertices with reference to a positive x-axis of a cartesian coordinate system based on a line segment generated by joining the pupil center and a corresponding externally exposed vertex;
sorting (212), by the one or more hardware processors, the plurality of externally exposed vertices in ascending order based on a corresponding computed angle;
extrapolating (214), by the one or more hardware processors, a plurality of points lying between adjacent externally exposed vertices using a linear function, wherein adjacency is considered based on ascending order of the computed angle;
constructing (216), by the one or more hardware processors, a closed curvature of an iris region on the input image by combining the sorted plurality of externally exposed vertices and the extrapolated plurality of points, wherein the closed curvature is further smoothened using a dilation filter; and
generating (218), by the one or more hardware processors, a segmented iris region from the input image by removing the circular pupil region from an area covered by the closed curvature of the iris region.

2. The processor implemented method as claimed in claim 1, wherein the internally covered vertices are the vertices lying in other polygons from among the plurality of polygons.

3. The processor implemented method as claimed in claim 1, wherein steps for training the object detection model comprises:
receiving a generic iris dataset comprising a plurality of iris images;
obtaining a plurality of augmented images corresponding to each of the plurality of iris images by scaling the corresponding plurality of iris images based on a plurality of scales, wherein the plurality of scales comprises angle, and image size;
selecting a polygon size based on the obtained generic iris dataset so that at least one vertex of the polygon touches inner boundary of the iris region, and each polygon comprises a portion of the iris and a portion of the pupil;
annotating a plurality of overlapping polygons of selected polygon size corresponding to each of the plurality of augmented images, wherein each of the plurality of overlapping polygons comprises a plurality of vertices;
identifying a plurality of polygons from among the plurality of overlapping polygons touching inner boundary of the iris region and comprising the portion of the iris and portion of the pupil, wherein the plurality of polygons are identified from among the plurality of overlapping polygons by:
generating a plurality of filters of equal size comprising a first region and a second region, wherein the first region is a white region comprising a plurality of white pixels and wherein the second region is a black semicircle region comprising a plurality of black pixels, wherein the plurality of filters are designed such that the semi-circular region of each of the plurality of filters covers one direction among a plurality of positions, wherein the plurality of positions comprises a top position, bottom position, left position, right position, top-right position, top-left position, bottom-right position and bottom-left position, and wherein the area of black region is at least a predefined minimum size of the image size; and
identifying the plurality of polygons from among the plurality of overlapping polygons by computing a pixel-wise dot product between each of the plurality of overlapping polygons and each of the plurality of filters, wherein the obtained product region is an overlap between the pupil region of the annotated polygon and the black semicircle region of the corresponding filter, wherein an area associated with the obtained product region is at least half of the black semicircle region of the corresponding filter; and
training the object detection model using the identified plurality of polygons until a predefined number of epochs.

4. A system (100) comprising:
at least one memory (104) storing programmed instructions; one or more Input /Output (I/O) interfaces (112); and one or more hardware processors (102) operatively coupled to the at least one memory (104), wherein the one or more hardware processors (102) are configured by the programmed instructions to:
receive an input image pertaining to eye of a subject, wherein the image comprises iris, pupil and sclera;
generate a plurality of polygons on the input image using a trained object detection model, wherein each of the plurality of polygons are associated with a plurality of vertices;
identify a plurality of internally covered vertices from among the plurality of vertices associated with each of the plurality of polygons only if (i) x coordinate value of a vertex lies between x intercept values of vertical lines associated with the corresponding polygon and (ii) y coordinate value of the vertex lies between y intercept values of horizontal lines associated with the corresponding polygon;
identify a plurality of externally exposed vertices associated with each of the plurality of polygons by filtering a set of vertices lying inside a circular pupil region based on a comparison between the radius of the pupil and the distance between each vertex from a pupil center, wherein the circular pupil region is identified from the input image using an image processing technique;
compute an angle made by each of the plurality of externally exposed vertices with reference to a positive x-axis of a cartesian coordinate system based on a line segment generated by joining the pupil centre and a corresponding externally exposed vertex;
sort the plurality of externally exposed vertices in ascending order based on a corresponding computed angle;
extrapolate a plurality of points lying between adjacent externally exposed vertices using a linear function, wherein adjacency is considered based on ascending order of the computed angle;
construct a closed curvature of an iris region on the input image by combining the sorted plurality of externally exposed vertices and the extrapolated plurality of points, wherein the closed curvature is further smoothened using a dilation filter; and
generate a segmented iris region from the input image by removing the circular pupil region from an area covered by the closed curvature of the iris region.

5. The system as claimed in claim 4, wherein the internally covered vertices are the vertices lying in other polygons from among the plurality of polygons.

6. The system as claimed in claim 4, wherein steps for training the object detection model comprises:
receiving a generic iris dataset comprising a plurality of iris images;
obtaining a plurality of augmented images corresponding to each of the plurality of iris images by scaling the corresponding plurality of iris images based on a plurality of scales, wherein the plurality of scales comprises angle, and image size;
selecting a polygon size based on the obtained generic iris dataset so that at least one vertex of the polygon touches inner boundary of the iris region, and each polygon comprises a portion of the iris and a portion of the pupil;
annotating a plurality of overlapping polygons of selected polygon size corresponding to each of the plurality of augmented images, wherein each of the plurality of overlapping polygons comprises a plurality of vertices;
identifying a plurality of polygons from among the plurality of overlapping polygons touching inner boundary of the iris region and comprising the portion of the iris and portion of the pupil, wherein the plurality of polygons are identified from among the plurality of overlapping polygons by:
generating a plurality of filters of equal size comprising a first region and a second region, wherein the first region is a white region comprising a plurality of white pixels and wherein the second region is a black semicircle region comprising a plurality of black pixels, wherein the plurality of filters are designed such that the semi-circular region of each of the plurality of filters covers one direction among a plurality of positions, wherein the plurality of positions comprises a top position, bottom position, left position, right position, top-right position, top-left position, bottom-right position and bottom-left position, and wherein the area of black region is at least a predefined minimum size of the image size; and
identifying the plurality of polygons from among the plurality of overlapping polygons by computing a pixel-wise dot product between each of the plurality of overlapping polygons and each of the plurality of filters, wherein the obtained product region is an overlap between the pupil region of the annotated polygon and the black semicircle region of the corresponding filter, wherein an area associated with the obtained product region is at least half of the black semicircle region of the corresponding filter; and
training the object detection model using the identified plurality of polygons until a predefined number of epochs.

7. One or more non-transitory machine-readable information storage mediums comprising one or more instructions which when executed by one or more hardware processors cause:
receiving an input image pertaining to eye of a subject, wherein the image comprises iris, pupil and sclera;
generating a plurality of polygons on the input image using a trained object detection model, wherein each of the plurality of polygons are associated with a plurality of vertices;
identifying a plurality of internally covered vertices from among the plurality of vertices associated with each of the plurality of polygons only if (i) x coordinate value of a vertex lies between x intercept values of vertical lines associated with the corresponding polygon and (ii) y coordinate value of the vertex lies between y intercept values of horizontal lines associated with the corresponding polygon;
identifying a plurality of externally exposed vertices associated with each of the plurality of polygons by filtering a set of vertices lying inside a circular pupil region based on a comparison between the radius of the pupil and the distance between each vertex from a pupil center, wherein the circular pupil region is identified from the input image using an image processing technique;
computing an angle made by each of the plurality of externally exposed vertices with reference to a positive x-axis of a cartesian coordinate system based on a line segment generated by joining the pupil center and a corresponding externally exposed vertex;
sorting the plurality of externally exposed vertices in ascending order based on a corresponding computed angle;
extrapolating a plurality of points lying between adjacent externally exposed vertices using a linear function, wherein adjacency is considered based on ascending order of the computed angle;
constructing a closed curvature of an iris region on the input image by combining the sorted plurality of externally exposed vertices and the extrapolated plurality of points, wherein the closed curvature is further smoothened using a dilation filter; and
generating, a segmented iris region from the input image by removing the circular pupil region from an area covered by the closed curvature of the iris region.

8. The one or more non-transitory machine-readable information storage mediums as claimed in claim 7, wherein the internally covered vertices are the vertices lying in other polygons from among the plurality of polygons.

9. The one or more non-transitory machine-readable information storage mediums as claimed in claim 7, wherein steps for training the object detection model comprises:
receiving a generic iris dataset comprising a plurality of iris images;
obtaining a plurality of augmented images corresponding to each of the plurality of iris images by scaling the corresponding plurality of iris images based on a plurality of scales, wherein the plurality of scales comprises angle, and image size;
selecting a polygon size based on the obtained generic iris dataset so that at least one vertex of the polygon touches inner boundary of the iris region, and each polygon comprises a portion of the iris and a portion of the pupil;
annotating a plurality of overlapping polygons of selected polygon size corresponding to each of the plurality of augmented images, wherein each of the plurality of overlapping polygons comprises a plurality of vertices;
identifying a plurality of polygons from among the plurality of overlapping polygons touching inner boundary of the iris region and comprising the portion of the iris and portion of the pupil, wherein the plurality of polygons are identified from among the plurality of overlapping polygons by:
generating a plurality of filters of equal size comprising a first region and a second region, wherein the first region is a white region comprising a plurality of white pixels and wherein the second region is a black semicircle region comprising a plurality of black pixels, wherein the plurality of filters are designed such that the semi-circular region of each of the plurality of filters covers one direction among a plurality of positions, wherein the plurality of positions comprises a top position, bottom position, left position, right position, top-right position, top-left position, bottom-right position and bottom-left position, and wherein the area of black region is at least a predefined minimum size of the image size; and
identifying the plurality of polygons from among the plurality of overlapping polygons by computing a pixel-wise dot product between each of the plurality of overlapping polygons and each of the plurality of filters, wherein the obtained product region is an overlap between the pupil region of the annotated polygon and the black semicircle region of the corresponding filter, wherein an area associated with the obtained product region is at least half of the black semicircle region of the corresponding filter; and
training the object detection model using the identified plurality of polygons until a predefined number of epochs.
